**Europäisches Patentamt**

(19) **European Patent Office**

**Office européen des brevets**

(11) **EP 0 800 987 B1**

(12) # EUROPEAN PATENT SPECIFICATION

(45) Date of publication and mention
of the grant of the patent:
**03.11.1999 Bulletin 1999/44**

(51) Int. Cl.$^6$: **B62L 3/08**, B62L 1/00

(21) Application number: **97104751.9**

(22) Date of filing: **20.03.1997**

(54) **Interlocked brake system for motor vehicle**

Gekoppelte Bremsanlage für Kraftfahrzeug

Système de freinage enclenché pour véhicule à moteur

(84) Designated Contracting States:
**DE ES FR IT**

(30) Priority: **11.04.1996 JP 8947596**

(43) Date of publication of application:
**15.10.1997 Bulletin 1997/42**

(73) Proprietor:
**Nissin Kogyo Co., Ltd.
Ueda-shi, Nagano (JP)**

(72) Inventors:
 • **Kobayashi, Naoki (Jp)
   Ueda-shi, Nagano (JP)**
 • **Matsuno, Isao
   Ueda-shi, Nagano (JP)**

(74) Representative:
**Buzzi, Franco et al
c/o Buzzi, Notaro & Antonielli d'Oulx Srl,
Corso Fiume, 6
10133 Torino (IT)**

(56) References cited:
**GB-A- 2 154 292          JP-A- 56 154 378**

## Description

### BACKGROUND OF THE INVENTION

#### FIELD OF THE INVENTION

The present invention relates to an interlocked brake system for a motor vehicle particularly suitable for two-wheeled motor vehicles, the interlocked brake system being designed to allow both a front wheel brake and a rear wheel brake to work simultaneously by a single brake operating part.

#### RELATED ART

The following two types of interlocked brake systems are known as conventional interlocked brake systems. As disclosed, e.g., in Unexamined Japanese Patent Publication No. Sho. 56-67681, a mechanical front wheel brake is mechanically interlocked with a mechanical rear wheel brake. On the other hand, as disclosed, e.g., in Unexamined Japanese Patent Publication No. Sho. 56-154378, which document shows an interlocked brake system according to the preamble of claim 1, both a hydraulic front wheel brake and a hydraulic rear wheel brake are caused to work by hydraulic pressure output from a common master cylinder.

By the way, while brake systems having a hydraulic front wheel brake and a mechanical rear wheel brake are often used for two-wheeled motor vehicles that are relatively light in weight, among these brake systems interlocked brake systems in which a hydraulic front wheel brake is interlocked with a mechanical rear wheel brake are not found.

Thus, the following interlocked brake system would be proposed. The mechanical rear wheel brake is coupled to the brake lever of the master cylinder through a brake cable, the brake lever of the master cylinder being attached to the steering handle to cause the hydraulic front wheel brake, and the rear wheel brake is caused to work by the operation of a single brake lever. That is, the system is designed to share a single brake lever in common for both the hydraulic and mechanical brakes before the system branches into these different types of brakes. However, in such a case, play of the brake cable affects. That is, since a play of the brake cable in the mechanical rear wheel brake system is greater than that of the brake cable in the hydraulic front wheel brake, the front wheel brake is caused to work in advance at the time the brake lever is operated, which in turn prevents both brakes from working simultaneously reliably.

### SUMMARY OF THE INVENTION

The present invention has been made in view of the aforementioned circumstances. An object of the invention is therefore to provide an interlocked brake system for a motor vehicle that not only allows both a hydraulic front wheel brake and a mechanical rear wheel brake to be caused to work simultaneously by a single brake operating part, but also allows the hydraulic front wheel brake to be caused to work reliably even if a breakage occurs in the mechanical system of the mechanical rear wheel brake.

To achieve the above object, a first feature of the present invention is that an interlocked brake system for a motor vehicle includes: a master cylinder that is caused to work by the operation of a brake operating part; a hydraulic front wheel brake that is caused to work by hydraulic pressure output from the master cylinder; a hydraulic actuator that is caused to work by the hydraulic pressure output from the master cylinder; and a mechanical rear wheel brake that has a working lever turned by the working of the hydraulic actuator through a brake cable, and that such interlocked brake system leaves an effective stroke necessary to work the front wheel brake in the brake operating part and the master cylinder even while the hydraulic actuator is working with full stroke.

In addition to the aforementioned feature, the present invention has a second feature in which a second brake operating part and the working lever are coupled through a second brake cable so that the rear wheel brake is operated also by the second brake operating part.

### BRIEF DESCRIPTION OF THE DRAWINGS

Fig. 1 is a side view of a motor scooter having an interlocked brake system of the present invention;
Fig. 2 is a diagram showing a steering handle; and
Fig. 3 is a system diagram showing main portions of the interlocked brake system in longitudinal cross sectional form.

### DESCRIPTION OF THE PREFERRED EMBODIMENTS

A preferred embodiment of the present invention will now be described with reference to an embodiment shown in the accompanying drawings.

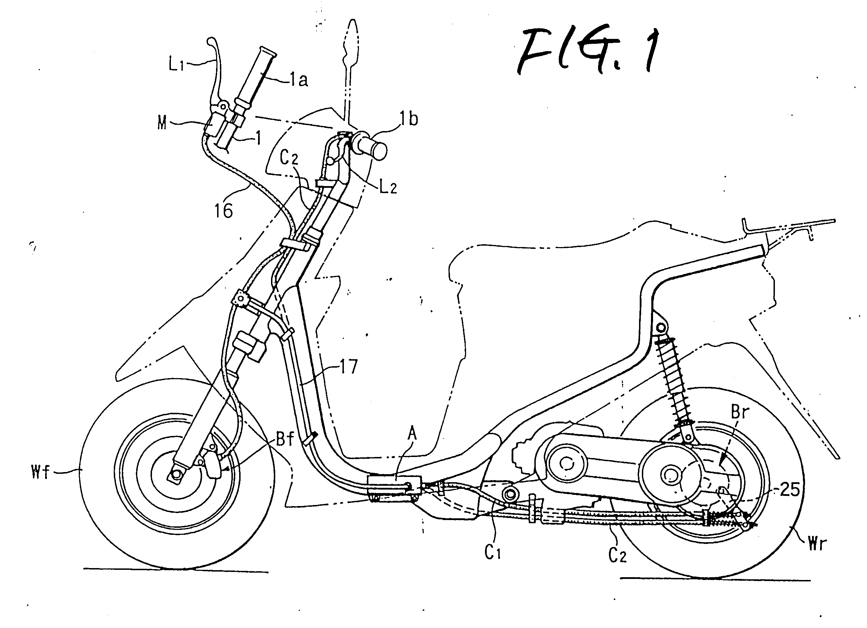

First, in Fig. 1, a motor scooter, which is a two-wheeled motor vehicle, has a hydraulic front wheel brake Bf for braking a front wheel Wf and a mechanical rear wheel brake Br for braking a rear wheel Wr. A first brake lever $L_1$ for operating both brakes Bf, Br simultaneously and a second brake lever $L_2$ for operating only the rear brake Br are arranged adjacent to a right-hand grip 1a and a left-hand grip 1b of a steering handle 1 of the motor scooter, respectively.

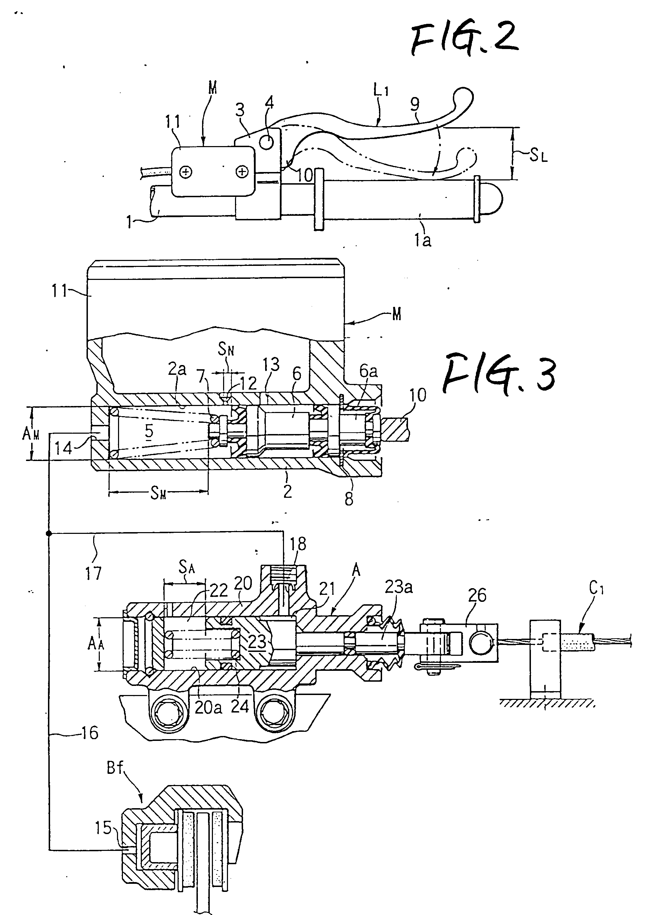

In Figs. 2 and 3, the cylinder main body 2 of a master cylinder M is attached to the steering handle 1 close to the inner end of the right-hand grip 1a, and the first brake lever $L_1$ is journaled 4 to a lever holder 3 that is formed integrally with the cylinder main body 2.

A piston 6 is fitted into a cylinder hole 2a of the cylinder main body 2, the piston defining a hydraulic chamber 5 with respect to the front end of the cylinder main body 2. A return spring 7 that urges the piston 6 toward the retreating limit is accommodated in the hydraulic chamber 5. The retreating limit of the piston 6 is regulated by the retreating surface of the piston 6 coming in contact with a stopper ring 8 that is retained on the inner surface of the rear end of the cylinder hole 2a. The piston 6 has a rod portion 6a that projects from the rear end face thereof. A working arm portion 10 of the first brake lever $L_1$ comes in contact with the end face of the rod portion 6a. The piston 6 can be driven forward through the working arm portion 10 by drawing an operating arm portion 9 of the lever $L_1$ nearer toward the right-hand grip 1a of the steering handle 1.

An oil reservoir 11 that stores operating oil is integrally formed on the upper side of the cylinder main body 2. A relief port 12 and a supply port 13 are bored in a partition wall between the oil reservoir 11 and the cylinder hole 2a. The relief port 12 is located so that when the piston 6 is to be positioned to the retreating limit, the oil chamber 5 communicates with the oil reservoir 11 immediately before the piston 6 comes to the retreating limit position. Therefore, when the piston 6 is caused to advance, the piston 6 can produce hydraulic pressure with the piston 6 having moved past an ineffective stroke $S_N$ in which the front edge of the piston 6 passes over the relief port 12 forward.

An output port 14 that is continuous to the hydraulic chamber 5 is bored in the front end wall of the cylinder main body 2, and this output port 14 is connected to an input port 15 of the hydraulic front wheel brake Bf (a hydraulic disc brake in the shown embodiment) through a hydraulic conduit 16.

A hydraulic actuator A is connected to the output port 14 of the master cylinder M or to the hydraulic conduit 16 through a branch conduit 17. The hydraulic actuator A includes: an actuator main body 20 having a cylinder hole 20a; a piston 23 that is fitted into the cylinder hole 20a to define the interior of the cylinder hole 20a into a hydraulic chamber 21 and an air chamber 22; and a return spring 24 that urges the piston 23 toward the hydraulic chamber 21. The downstream end of the branch conduit 17 is connected to an input port 18 that is continuous to the hydraulic chamber 21 while bored in the actuator main body 20. The actuator main body 20 is secured to a motor scooter body potion that is extremely close to the rear wheel brake Br (to the step portion in the shown embodiment).

The piston 23 has a piston rod 23a that passes through an end wall of the hydraulic chamber 21 fluid-tight. The front end of a first brake cable $C_1$ is connected to the piston rod 23a through a yoke 26, and the rear end of the cable $C_1$ is connected to a working lever 25 of the mechanical rear wheel brake Br (a mechanical drum brake in the shown embodiment).

A second brake lever $L_2$ is coupled to the working lever 25 through a second brake cable $C_2$. For the coupling of the cables, it is so arranged that the coupling point of the first brake cable $C_1$ comes nearer toward the turning center of the lever 25 than the coupling point of the second brake cable $C_2$.

Thus, when the first brake lever $L_1$ is turned toward the right-hand grip 1a of the steering handle 1 to cause the master cylinder M to work, hydraulic pressure produced in the hydraulic chamber 5 is supplied to the front wheel brake Bf and the hydraulic actuator A via the output port 14, the hydraulic conduit 16, and the branch conduit 17, and as a result, these members Bf and A are caused to work.

At this time, the hydraulic actuator A has the piston 23 thereof operated by the hydraulic pressure supplied to the hydraulic chamber 21 thereof in Fig. 3. That is, the first brake cable $C_1$ is pulled by the piston 23, which then turns the working lever 25, so that the rear wheel brake Br works. Thus, as a result of the operation of the first brake lever $L_1$, both the hydraulic front wheel brake Bf and the mechanical rear wheel brake Br can be caused to work simultaneously.

Since the hydraulic actuator A, in particular, is arranged at a motor scooter body fixing portion that is extremely close to the rear wheel brake Br, the first brake cable $C_1$ connecting between the piston 23 and the working lever 25 becomes extremely short. As a result, delay in operating the rear wheel brake Br due to play of the cable can be minimized, which in turn allows both the front and the rear brakes Bf, Br to be caused to work simultaneously reliably.

In addition, since the coupling point of the first brake cable $C_1$ on the working lever 25 is located nearer toward the turning center of the working lever 25, the effective arm length of the lever 25 at the time of turning is relatively short. Therefore, the braking force of the rear wheel brake Br is controlled to be weaker than that of the front wheel brake Bf, which can provide a motor scooter with satisfactory braking.

In the thus constructed interlocked brake system, in order to ensure that the front wheel brake Bf will be caused to work by operating the first brake lever $L_1$ should the first brake cable $C_1$ be broken, the dimensions of the various parts of the master cylinder M and the hydraulic actuator A are set so that the following equation can be established.

$S_L$: effective stroke of the operating arm portion 9 of the first brake lever $L_1$

E: lever ratio of the first brake lever $L_1$ (operating arm portion 9 length / working arm portion 10 length)

$S_M$: maximum stroke of the piston 6 of the master cylinder M

$S_N$: ineffective stroke of the piston 6 of the master cylinder M

$A_M$: cross-sectional area of the hydraulic chamber 5 of the master cylinder M

$S_A$: maximum stroke of the piston 23 of the hydraulic actuator A

$A_A$: cross-sectional area of the hydraulic chamber 21 of the hydraulic actuator A

V: quantity of operating oil of the front wheel brake Bf

$$0 < \frac{A_M(S_M\text{-}S_N)\text{-}A_A \times S_A\text{-}V}{A_M} < \frac{S_L}{E}$$

Therefore,

$$\frac{A_A \times S_A}{A_M} < S_M - S_N - \frac{V}{A_M} < \frac{S_L}{E} \qquad (1)$$

In the aforementioned equation (1), $A_A \times S_A / A_M$ gives the effective stoke volume of the hydraulic actuator A in terms of the stroke of the piston 6 of the master cylinder M; $S_M - S_N - V / A_M$ gives the effective stroke of the piston 6 of the master cylinder M with the quantity of oil necessary to cause the front wheel brake to work taken into account; and $S_L / E$ gives the effective stroke of the working arm portion 10 of the first brake lever $L_1$. Therefore, according to the aforementioned equation (1), when the mater cylinder is caused to work by operating the first brake lever $L_1$, even if the first brake cable $C_1$ is broken to thereby cause the piston 23 of the hydraulic actuator A to move with full stroke, there still remains a stroke necessary and sufficient to cause the front wheel brake Bf to work in both the first brake lever $L_1$ and the master cylinder M. As a result, at least the front wheel brake Bf can be caused to work reliably.

Further, even if this case, when the second brake lever $L_2$ is operated, the working lever 25 can be turned through the second brake cable $C_2$, which in turn allows the rear wheel brake Br to be caused to work.

With respect to the effective stroke $S_L$ of the operating arm portion 9 of the first brake lever $L_1$, it is preferred, in practical terms, that a redundant stroke portion that is 1/3 to 1/4 the effective stroke $S_L$ remain between the operating arm portion 9 and the right-hand grip 1a even when the piston 23 of the hydraulic actuator A has moved with full stroke.

The invention is not limited to the aforementioned embodiment, but may be designed around in various modes as long as such design modes do not depart from the scope of the present invention as defined in the appended claims. For example, the first and the second brake levers $L_1$, $L_2$ can be implemented in the form of foot brake pedals.

As described in the foregoing, according to the first feature of the present invention, the interlocked brake system includes: a master cylinder that is caused to work by operating a brake operating part; a hydraulic front wheel brake that is caused to work by hydraulic pressure output from the master cylinder; a hydraulic actuator that is caused to work by the hydraulic pressure output from the master cylinder; and a mechanical rear wheel brake that has a working lever turned by the working of the hydraulic actuator through a brake cable. By arranging the hydraulic actuator, the length of the first brake cable can be reduced, which in turn contributes to reducing a delay in operating the rear wheel brake caused by play of the brake cable. Hence, when the master cylinder is caused to work by the brake operating part, the hydraulic front wheel brake and the mechanical rear wheel brake can be caused to work simultaneously reliably.

In addition, even while the hydraulic actuator is working with full stroke, the interlocked brake system leaves an effective stroke sufficient to cause the front wheel brake to work in the brake operating part and the master cylinder. Therefore, should the brake cable be broken, the front wheel brake can be caused to work reliably by the hydraulic pressure output from the master cylinder after the hydraulic actuator has moved maximum stroke as long as the master cylinder is operating.

Moreover, according to the second feature of the present invention, a second brake operating part and the working lever are coupled through a second brake cable so that the rear wheel brake is caused to work also by the second brake operating part. As a result of this construction, even if the first brake cable has broken, both the front and the rear wheel brakes can be caused to work simultaneously by the simultaneous operation of the first and the second brake operating parts.

## Claims

1. An interlocked brake system for a motor vehicle, comprising:

   a master cylinder (M) being caused to work by the operation of a brake operating part ($L_1$);
   a hydraulic front wheel brake (Bf) being caused to work by hydraulic pressure output from the master cylinder (M);
   a hydraulic actuator (A) being caused to work by the hydraulic pressure output from the master cylinder (M); characterized by
   a mechanical rear wheel brake (Br) having a working lever (25) turned by the working of the hydraulic actuator (A) through a brake cable ($C_1$), the interlocked brake system being such that, even when the hydraulic actuator (A) operates at its full stroke, the effective stroke of both the brake operating part ($L_1$) and of the master cylinder (M) still remains sufficient to cause the front wheel brake (Bf) to function.

**2.** An interlocked brake system for a motor vehicle according to claim 1, wherein

a second brake operating part (L$_2$) and the working lever (25) are coupled through a second brake cable (C$_2$) so that the rear wheel brake (Br) is caused to work also by the second brake operating part (L$_2$).

## Patentansprüche

**1.** Gekoppelte Bremsanlage für ein Kraftfahrzeug, die folgendes umfaßt:

einen Hauptzylinder (M), der durch den Betrieb eines Bremsbetriebsteils (L$_1$) dazu gebracht wird, zu arbeiten;

eine hydraulische Vorderradbremse (Bf), die durch den hydraulischen Druck, der von dem Hauptzylinder (M) abgegeben wird, dazu gebracht wird, zu arbeiten;

ein hydraulischer Betätiger (A), der durch den hydraulischen Druck, der von dem Hauptzylinder (M) abgegeben wird, dazu gebracht wird, zu arbeiten; gekennzeichnet durch

eine mechanische Hinterradbremse (Br), die einen Arbeitshebel (25) aufweist, der durch die Arbeit des hydraulischen Betätigers (A) durch ein Bremskabel (C$_1$) betätigt wird, wobei die gekoppelte Bremsanlage derart ausgebildet ist, dass, selbst wenn der hydraulische Betätiger (A) mit seinem vollen Hub betrieben wird, der effektive Hub von sowohl dem Bremsbetriebsteil (L$_1$) und von dem Hauptzylinder (M) immer noch ausreichend bleibt, um die Vorderradbremse (Bf) zu veranlassen, zu funktionieren.

**2.** Gekoppelte Bremsanlage für ein Kraftfahrzeug gemäß Anspruch 1, worin

ein zweites Bremsbetriebsteil (L$_2$) und der Arbeitshebel (25) durch ein zweites Bremskabel (C$_2$) miteinander gekoppelt sind, so dass die Hinterradbremse (Br) auch durch das zweite Bremsbetriebsteil (L$_2$) dazu gebracht wird, zu arbeiten.

## Revendications

**1.** Système de freinage interconnecté pour un véhicule à moteur comprenant :

un maître cylindre (M) qui est amené à fonctionner grâce à l'actionnement d'une partie d'actionnement de frein (L1);

un frein de roue avant hydraulique (Bf) qui est amené à fonctionner grâce à une pression hydraulique délivrée par le maître-cylindre (M); un actionneur hydraulique (A) qui est amené à fonctionner grâce à la pression hydraulique délivrée par le maître-cylindre (M); caractérisé par

un frein de roue arrière mécanique (Br) qui a un levier d'actionnement (25) tourné par l'actionnement de l'actionneur hydraulique (A) par l'intermédiaire d'un câble de frein (C1), le système de freinage interconnecté étant tel que, même lorsque l'actionneur hydraulique (A) travaille sur sa course complète, la course effective à la fois de la partie d'actionnement de frein (L1) et du maître-cylindre (M) reste toujours suffisante pour actionner le frein de roue avant (Bf).

**2.** Système de freinage interconnecté pour un véhicule à moteur selon la revendication 1, dans lequel une deuxième partie d'actionnement de frein (L2) et le levier d'actionnement (25) sont reliés par l'intermédiaire d'un deuxième câble de frein (C2) de telle sorte que le frein de roue arrière (Br) est amené également à fonctionner grâce à la deuxième partie d'actionnement de frein (L2).

FIG. 1

# FIG.2

# FIG.3